# EUROPEAN PATENT APPLICATION

(11) **EP 3 323 990 A1**
(43) Date of publication of application: **23.05.2018**
(21) Application number: 17202246.9
(22) Date of filing: 17.11.2017
(51) Int. Cl.: F01D 5/18, B23P 15/04, F01D 5/14, F01D 5/28

(54) **AIRFOIL, CORRESPONDING GAS TURBINE ENGINE AND METHOD OF ASSEMBLING AN AIRFOIL**

(30) Priority: 17.11.2016 US 201615353840
(71) Applicant: United Technologies Corporation, Farmington, CT 06032 (US)
(72) Inventor: SURACE, Raymond, Newington, Connecticut 06111 (US)
(74) Representative: Hull, James Edward

(57) **Abstract**

An airfoil (60; 160; 260; 360; 460) includes an airfoil section (66) that defines an airfoil profile (AP). The airfoil section (66) includes a core structure (72...472) and a hollow panel (70...370) adjacent to the core structure (72...472). The hollow panel (70...370) forms at least a portion of a leading end (LE) of the airfoil profile (AP).

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. The fan section may also be driven by the low inner shaft. A direct drive gas turbine engine includes a fan section driven by the low spool such that the low pressure compressor, low pressure turbine and fan section rotate at a common speed in a common direction.

A speed reduction device, such as an epicyclical gear assembly, may be utilized to drive the fan section such that the fan section may rotate at a speed different than the turbine section. In such engine architectures, a shaft driven by one of the turbine sections provides an input to the epicyclical gear assembly that drives the fan section at a reduced speed.

### SUMMARY

An airfoil according to an example of the present disclosure includes an airfoil section that defines an airfoil profile. The airfoil section has a core structure, and a hollow panel adjacent the core structure. The hollow panel forms at least a portion of a leading end of the airfoil profile.

In a further embodiment of any of the foregoing embodiments, the airfoil section includes inner and outer platforms, and the hollow panel is affixed between the inner and outer platforms but is not directly secured to the core structure.

In a further embodiment of any of the foregoing embodiments, the hollow panel includes a single, exclusive internal passage.

A further embodiment of any of the foregoing embodiments includes a spacer that offsets the hollow panel from the core structure such that there is a gap between the hollow panel and the core structure.

In a further embodiment of any of the foregoing embodiments, the core structure includes cooling holes that open to the gap.

In a further embodiment of any of the foregoing embodiments, the spacer is a projection on the core structure.

In a further embodiment of any of the foregoing embodiments, the spacer is laterally offset from a camber line of the airfoil profile.

In a further embodiment of any of the foregoing embodiments, the spacer is disposed in a slot in at least one of the core structure or the hollow panel.

In a further embodiment of any of the foregoing embodiments, the spacer is disposed in a first slot in the core structure and a second slot in the hollow panel.

In a further embodiment of any of the foregoing embodiments, the spacer restricts gas from a core gas path from migrating from a pressure side of the airfoil profile through the gap to a suction side of the airfoil profile.

In a further embodiment of any of the foregoing embodiments, the hollow panel includes an exterior wall that forms the portion of the airfoil profile and an interior wall adjacent the core structure. The interior wall defines a panel alcove, and a portion of the core structure is disposed in the panel alcove.

In a further embodiment of any of the foregoing embodiments, the hollow panel is ceramic and the core structure is metal.

In a further embodiment of any of the foregoing embodiments, the core structure includes an exterior wall that forms a portion of the airfoil profile.

In a further embodiment of any of the foregoing embodiments, at least one of the panel or the core structure includes a geometrically segmented coating section. The geometrically segmented coating section includes a wall that has an outer side. The outer side includes an array of cells, and a coating is disposed in the array of cells.

A gas turbine engine according to an example of the present disclosure includes a compressor section, a combustor in fluid communication with the compressor section, and a turbine section in fluid communication with the combustor. One of the turbine section or the compressor section has an airfoil that has an airfoil section that defines an airfoil profile. The airfoil section includes a core structure, and a hollow panel adjacent the core structure. The hollow panel forms at least a portion of a leading end of the airfoil profile.

In a further embodiment of any of the foregoing embodiments, the airfoil section includes inner and outer platforms, and the hollow panel is affixed between the inner and outer platforms but is not secured directly to the core structure.

A further embodiment of any of the foregoing embodiments includes a spacer that offsets the hollow panel from the core structure such that there is a gap between the hollow panel and the core structure.

In a further embodiment of any of the foregoing embodiments, the core structure includes cooling holes that open to the gap.

A method of assembling an airfoil according to an example of the present disclosure includes securing a hollow panel and a core structure between inner and outer platforms to form an airfoil section. The airfoil section has an airfoil profile and the hollow panel defines at least a portion of a leading end of the airfoil profile.

A further embodiment of any of the foregoing embodiments includes spacing the hollow panel from the core structure such that there is a gap between the hollow panel and the core structure.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2A illustrates an example airfoil in the gas turbine engine.
Figure 2B illustrates a sectioned view of the airfoil of Figure 2A.
Figure 2C illustrates a cutaway view of the airfoil of Figure 2A.
Figure 2D illustrates an exploded view of portions of the airfoil of Figure 2A.
Figure 3 illustrates another example of an airfoil having a hollow panel and a core structure.
Figure 4 illustrates an exploded view of an example airfoil having a hollow panel and a core structure.
Figure 5 illustrates a cutaway view of another example airfoil that has a spacer.
Figure 6 illustrates a sectioned view of the airfoil of Figure 5.
Figure 7 illustrates a sectioned view of another example airfoil having a spacer and a slot.
Figure 8 illustrates a sectioned view of another example airfoil having a spacer and two slots.
Figure 9 illustrates another example airfoil that includes a plurality of hollow panels.
Figure 10 illustrates a representative portion of a geometrically segmented coating.
Figure 11 illustrates a wall of the segmented substrate, without the coating.

### DETAILED DESCRIPTION

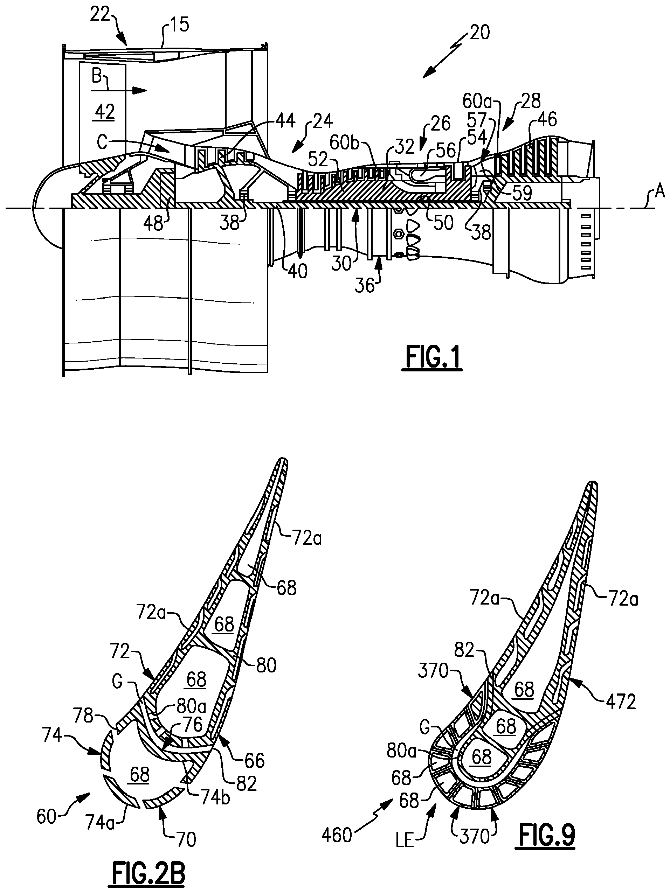

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engine designs can include an augmentor section (not shown) among other systems or features.

The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, the examples herein are not limited to use with two-spool turbofans and may be applied to other types of turbomachinery, including direct drive engine architectures, three-spool engine architectures, and ground-based turbines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 may be connected to the fan 42 through a speed change mechanism, which in exemplary gas turbine engine 20 is illustrated as a geared architecture 48, to drive the fan 42 at a lower speed than the low speed spool 30.

The high speed spool 32 includes an outer shaft 50 that interconnects a second (or high) pressure compressor 52 and a second (or high) pressure turbine 54. A combustor 56 is arranged between the high pressure compressor 52 and the high pressure turbine 54. A mid-turbine frame 57 of the engine static structure 36, if included, is arranged generally between the high pressure turbine 54 and the low pressure turbine 46. The mid-turbine frame 57 further supports the bearing systems 38 in the turbine section 28. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines, including direct drive turbofans and gas turbines with multiple bypass streams.

A significant amount of thrust is provided by the bypass flow B due to the high bypass ratio. The fan section 22 of the engine 20 may be designed for a particular flight condition -- typically cruise at about 0.8 Mach and about 35,000 feet (10.7 km). The flight condition of 0.8 Mach and 35,000 ft (10.7 km), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (°R = K x 9/5). The "Low corrected fan tip speed" as disclosed herein according to one non-limiting embodiment is less than about 1150 ft / second (351 m/s).

In gas turbine engines air is often bled from the compressor for cooling components in the turbine that cannot withstand stoichiometric ideal temperatures of fuel burn; however, compressor bleed penalizes engine efficiency. Efficiency is governed by thermodynamics and mass flow through the turbine. Efficiency can generally be increased by lowering volume of compressor bleed, increasing velocity of compressor bleed, or increasing temperature of compressor bleed. These goals are challenging to meet because compressor bleed relies on the pressure differential between the compressor and the turbine. That is, the goals of lower volume, increased velocity, and increased temperature of compressor bleed are generally opposite to the goals of high pressure and low temperature compressor bleed desired for achieving good pressure differential. In this regard, to facilitate overcoming such challenges, an approach taken in this disclosure is to reduce the need for compressor bleed and cooling by enhancing the temperature resistance capability of the turbine or other components exposed to high temperatures. In particular, thermal resistance can be enhanced at the compressor exit and turbine inlet.

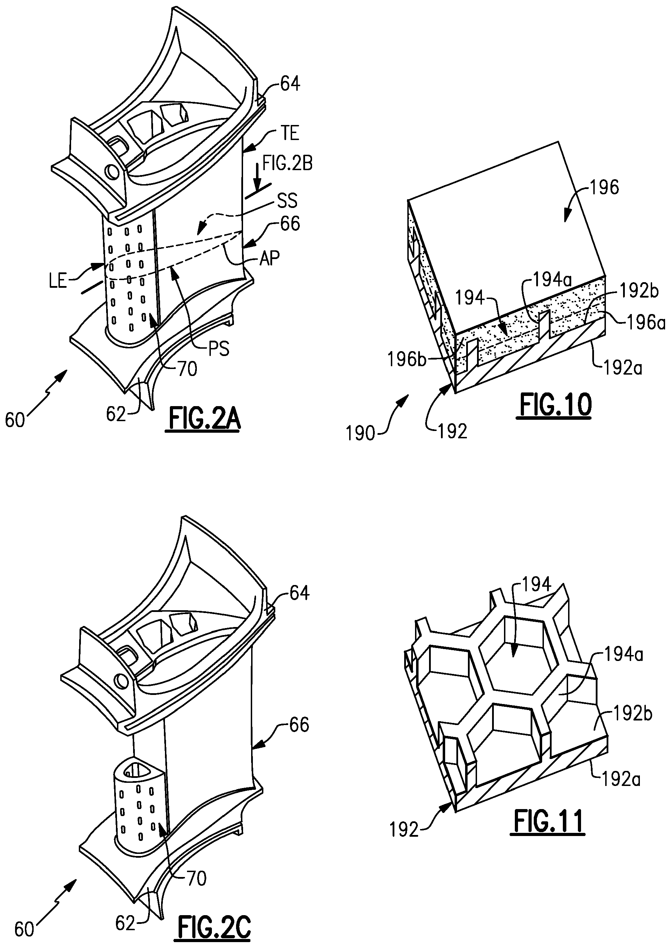

Figure 2A illustrates one such component, namely an airfoil 60. Figure 2B illustrates a sectioned view of the airfoil 60, and Figure 2C depicts the airfoil 60 with a portion of a leading end cutaway. For instance, the airfoil 60 can be a turbine vane, as represented at 60a in Figure 1, or a compressor vane, as represented at 60b in Figure 1. As will be appreciated, although the examples herein are described in the context of a vane, this disclosure is not limited to vanes, and the examples may also be applicable to blades or other airfoils that are exposed to high temperatures.

The airfoil 60 includes inner and outer platforms 62/64 and an airfoil section 66 that extends radially between the inner and outer platforms 62/64. The airfoil section 66 may be hollow and can include one or more internal passages 68. A passage can include a cavity, a channel, or the like.

The airfoil section 66 defines an airfoil profile, AP, which is the peripheral shape of the airfoil section 66 when viewed in a radial direction. For example, the airfoil profile has a wing-like shape that provides a reaction force via Bernoulli's principle with regard to flow over the airfoil section 66. The airfoil profile generally includes a leading end (LE), a trailing end (TE), a pressure side (PS), and a suction side (SS). For example, the leading end (LE) is the region of the airfoil profile (AP) that includes a leading edge of the airfoil profile (AP), and the trailing end (TE) is the region of the airfoil profile that includes a trailing edge. The leading edge may be the portion of the airfoil profile (AP) that first contacts air or the foremost edge of the airfoil profile (AP). The trailing edge may be the portion of the airfoil profile (AP) that last contacts air or the aftmost edge of the airfoil profile (AP). For a variable vane, the leading edge may shift, depending on the orientation of the vane.

The airfoil section 66 includes at least one distinct hollow panel 70. The hollow panel 70 forms a portion of the airfoil profile, which in this example is, or is a portion of, the leading end LE. The hollow panel 70 is affixed between the inner and outer platforms 62/64 adjacent to a core structure 72 but is not directly secured to the core structure 72. For instance, the hollow panel 70 is removably secured between the platforms 62/64 so that it can be removed and replaced if needed.

The hollow panel 70 defines at least one internal passage, which in this example is one of the passages 68. For instance, the hollow panel 70 contains a single, exclusive passage 68. The passage 68 permits cooling bleed air to be provided into or through the hollow panel 70. Alternatively, the passage 68 may be sealed to provide an insulation volume.

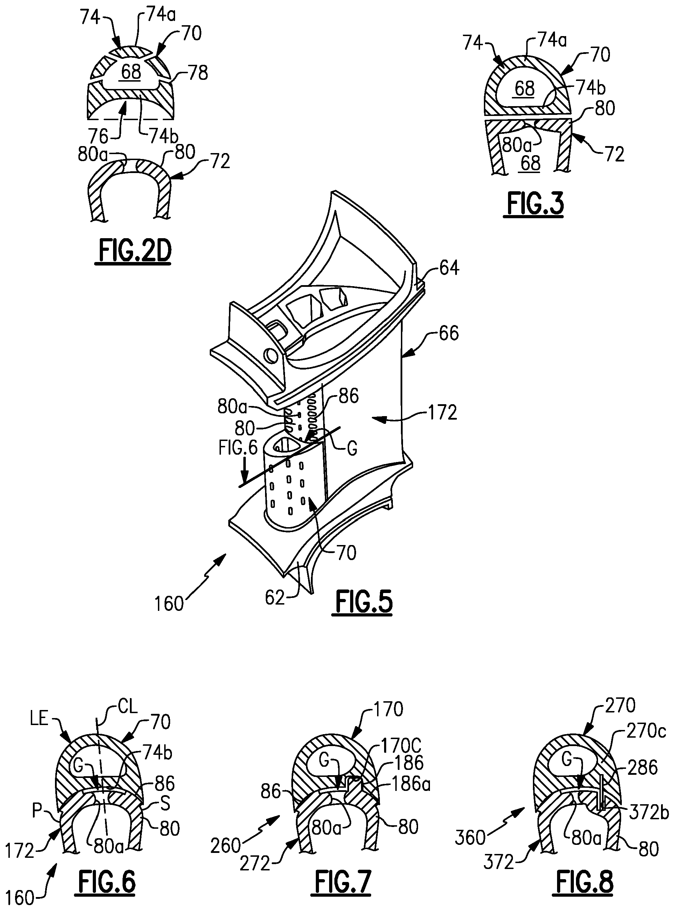

Referring also to Figure 2D that shows an exploded sectioned view of the hollow panel 70 and a portion of the core structure 72, the hollow panel 70 includes a panel wall 74 that circumscribes the passage 68. The panel wall 74 includes an exterior wall or wall portion 74a that is exposed in the core gas path and a panel interior wall or wall portion 74b. In this example, the interior wall 74b is arcuate and defines a panel alcove 76 (inside the dashed line). When fully assembled, the core structure 72 is disposed in the panel alcove 76, which partially wraps around the core structure 72, to facilitate sealing and positioning and to maintain an aerodynamic profile. Interior wall 74b could be angled instead of arcuate, featuring one or more angled surfaces. Alternatively, in a modified example shown in Figure 3, the interior wall 74b is flat or substantially flat, without the alcove 76. A combination of flat, angled, and arcuate surfaces may also define interior wall 74b.

The panel wall 74 (Figure 2D) may also include features to facilitate thermal management. For instance, the exterior wall 74a may include one or more cooling holes 78 to provide a film of cooling bleed air over the outside surface of the exterior wall 74a. As will be appreciated given this disclosure, the locations, sizes, and numbers of cooling holes 78 may be varied depending on cooling requirements.

The core structure 72 may be formed of a ceramic, a ceramic matrix composite, or a metal alloy. Metal alloys provide a good combination of strength and durability. Example alloys may include, but are not limited to, nickel alloys, cobalt alloys, a nickel alloy coated with cobalt or cobalt alloy, or non-nickel alloys that do not substantially react with ceramic. Most typically, the core structure 72 is a single piece or single monolithic piece.

The core structure 72 generally includes several portions, defined by the different functions served. The forward portion of the core structure 72 may serve to facilitate cooling the hollow panel 70, and the aft portion of the core structure 72 may serve to define a portion of the airfoil profile. In that regard, the aft portion of the core structure 72 may include exterior wall portions 72a (Figure 2B) that form a portion of the airfoil profile. In the illustrated example, the exterior wall portions 72a form the trailing end TE of the airfoil profile, which may have less severe environmental exposure conditions which the alloy of the core structure 72 can withstand. However, if enhanced thermal or environmental resistance is desired, a panel or a hollow panel can instead be used to form the trailing end of the airfoil profile or the exterior wall portion 72a can be coated with a thermal and/or environmental barrier ceramic coating. As an example, the ceramic may include or may be oxides, carbides, nitrides, borides, silicides, or combinations thereof. In further examples, the ceramic may be or may include yttria stabilized with zirconia, hafnia, and/or gadolinia, gadolinia zirconate, molybdate, alumina, or combinations thereof. The exterior wall portions 72a may also form all of, or portions of, the pressure side PS and the suction side SS of the airfoil profile.

The leading end LE may be exposed to severe temperature and erosion conditions. In this regard, the hollow panel 70 may be adapted for the particular environmental conditions and angles of incidence experienced by the leading end LE of the airfoil profile (e.g., for variable vane implementations in which the airfoil 60 can be pivoted). In one example, the material of which the hollow panel 70 is formed is selected to enhance the performance of the hollow panel 70 for the leading end LE. For example, the hollow panel 70 is ceramic, which has high temperature resistance and corrosion resistance in comparison to nickel alloys. A ceramic material is a compound of metallic or metalloid elements bonded with nonmetallic elements or metalloid elements primarily in ionic or covalent bonds. Example ceramic materials may include, but are not limited to, oxides, carbides, nitrides, borides, silicides, and combinations thereof. In further examples, the hollow panel 70 is formed of a monolithic ceramic or a ceramic matrix composite (CMC). For example, a monolithic ceramic is composed of a single, homogenous ceramic material, which may be extruded into the geometry of the hollow panel 70. In comparison, a composite is composed of two or more materials that are individually easily distinguishable. A CMC has a reinforcement phase, such as ceramic or carbon fibers, dispersed in a ceramic matrix formed of oxides, carbides, nitrides, borides, silicides, or combinations thereof.

Cooling bleed air may be provided from the core structure 72. In this regard, the core structure 72 may include a core wall 80 that circumscribes one or more passages 68. The core wall 80 may also have one or more core cooling holes 80a for emitting the cooling bleed air to the hollow panel 70. The core cooling holes 80a provide impingement cooling onto the interior wall 74b of the hollow panel 70.

The hollow panel 70 is affixed relative to the core structure 72 such that there is a gap G (Figure 2B) between the hollow panel 70 and the core structure 72. The gap G serves as a passage for distributing the cooling bleed air from the core structure 72 over the interior wall 74b of the hollow panel 70. In one example, the gap G is of uniform size along the full or substantially full radially length of the airfoil section 66, to facilitate uniform cooling. The cooling bleed air in the gap may be discharged into the core gas path from slots 82 at the edges of the hollow panel 70 and core structure 72.

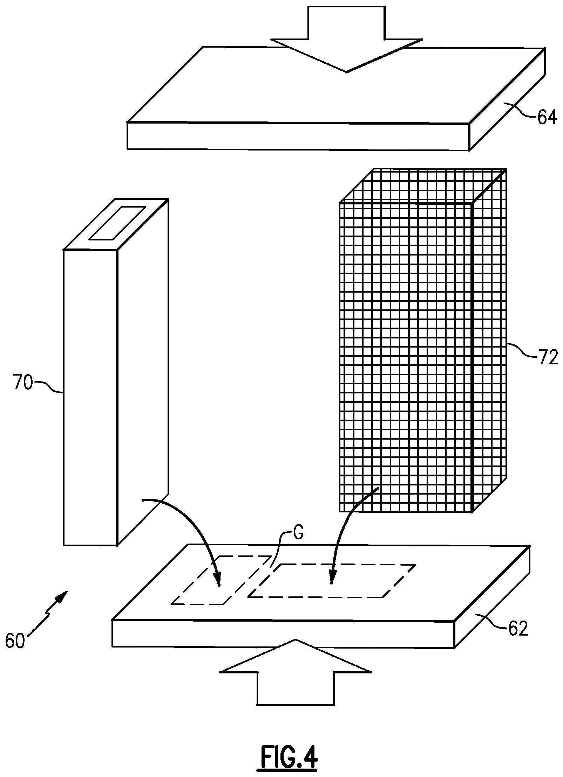

Figure 4 illustrates an exploded view of selected components of the airfoil 60, with the components schematically represented. To assemble the airfoil 60, the hollow panel 70 and core structure 72 are trapped between the platforms 62/64 to form the airfoil 60. In this regard, the trapping by the platforms 62/64 establishes the fixed positions of the hollow panel 70 and the core structure 72, and thus also establishes the gap G. Should the panels 70 or core structure 72 require replacement, the airfoil 60 can be disassembled, the hollow panel 70 and/or core structure 72 can be replaced with new ones, and the airfoil 60 can be reassembled. Accordingly, the hollow panel 70 and core structure 72 can be produced individually as new parts for an original airfoil or as replacement parts in an existing airfoil.

In modified examples, there may be additional features to facilitate the relative positioning between the hollow panel 70 and the core structure 72. For instance, Figure 5 illustrates another example airfoil 160. In this disclosure, like reference numerals designate like elements where appropriate and reference numerals with the addition of one-hundred or multiples thereof designate modified elements that are understood to incorporate the same features and benefits of the corresponding elements. In this example, the airfoil 160 includes one or more spacers 86 that offset the hollow panel 70 from the core structure 172. The spacers 86 may be used exclusively to establish the gap G, or the spacers 86 may be used in cooperation with the platforms 62/64 to establish the gap G. In the example shown, the spacers 86 are projections on the core wall 80 of the core structure 172. For instance, the spacers 86 are integrally formed with the core structure 172. Additionally or alternatively, the spacers 86 may be separate pieces from the core structure 172 or pieces that are attached onto the core structure 172. The spacers 86 may also serve to restrict hot gaspath flow from migrating from the pressure side PS of the airfoil section 66 through gap G to the suction SS of the airfoil section 66.

Figure 6 illustrates a sectioned view of the airfoil 160. A portion of the spacers 86 are arranged proximal to the pressure side PS of the airfoil section 66 and another portion of the spacers 86 are arrange proximal to the section side SS (e.g., in radial rows). For instance, the spacers 86 are laterally offset from a camber line CL of the airfoil profile. Thus, the spacers 86 serve to facilitate distribution of cooling bleed air in the gap G but also provide some sealing of the gap G at the edges of the hollow panel 70 and core structure 72 so that the cooling bleed air has a longer residence time in the gap before being discharged into the core gas path. As will be appreciated, the size, number, and location of such spacers 86 may be modified depending on the cooling requirements.

Figure 7 illustrates a sectioned view of another example airfoil 260. In this example, the core structure 272 includes a spacer 186 that is somewhat enlarged in comparison to the spacer 86. The hollow panel 170 includes a slot 170c in which the spacer 186 is disposed. The spacer 186 is oversized for the slot 170c such that the spacer 186 bottoms out in the slot 170c to establish the gap G. Additionally, the partial interlocking of the spacer 186 and the slot 170c facilitates sealing of the gap G, but may also serve to facilitate proper positioning and assembly between the hollow panel 170 and the core structure 272. One or more additional smaller spacers 186a may be used adjacent the spacer 186 for additional positioning and/or sealing. Of course, in modified examples, the slot may be provided on the core structure 272 and the spacer may be provided on the hollow panel 170.

Figure 8 illustrates a sectioned view of another example airfoil 360. In this example, the spacer 286 is a separate piece from the hollow panel 270 and the core structure 372. The hollow panel 270 includes a first slot 270c and the core structure 372 includes a second slot 372b in which the spacer 286 is disposed. The spacer 286 is oversized for the slots 270c/372b such that the spacer 286 bottoms out in both slots 270c/372b to establish the gap G. Additionally, the partial interlocking of the spacer 286 in the slots 270c/372b facilitates sealing of the gap G, but may also serve to facilitate proper positioning between the hollow panel 270 and the core structure 372.

Figure 9 illustrates another example airfoil 460. In this example, the airfoil 460 includes a plurality of hollow panels 370 that form at least a portion of the leading end of the airfoil profile. In this example, the hollow panels 370 abut one another; however, two or more of the hollow panels 370 may alternatively be spaced apart to provide a slot there between to emit cooling bleed air, similar to the slot 82.

As described above, there may be instances in which the exterior wall portions 72a that form a portion of the airfoil profile require greater thermal or environmental resistance. Similarly, there may also be instances in which the hollow panel 70/170/270/370 requires greater thermal or environmental resistance. Generally, greater thermal or environmental resistance reduces the need for cooling bleed air. In this regard, Figure 10 illustrates a representative portion of a geometric segmented coating section 190, which may be used on any of the example core structures or hollow panels described herein. The coating section 190 includes a wall 192. The wall 192 includes a first or inner side 192a and a second or exterior side 192b that is opposite the first side 192a. The second side 192b includes an array of cells 194 defined by cell sidewalls 194a. The array is a repeating geometric pattern of one or more cell geometries. In this example, the cell sidewalls 194a have a uniform thickness. As shown in the isolated view of the wall 192 in Figure 11, the cells 194 are hexagonal. Alternatively, the cells 194 may be circular, ovular, other polygonal geometry, or mixed cell geometries. The cells may have been machined or cast directly into the wall 192 (as a substrate), or machined into a metallic bond coating applied to the wall exterior side 192b. In the case where the cells are machined or cast directly into the wall 192 (as a substrate), a metallic bond coating is applied.

A coating 196 (Figure 10) is disposed in the array of cells 194. The cells 194 mechanically segment the coating. This segmentation induces stress relief cracks in the ceramic coating making it tolerant to sintering. The cells 194 thus provide good bonding and spallation resistance of the coating 196, particularly at higher temperature locations. In turn, greater spallation resistance may reduce the need for bleed air for cooling or enable use of higher temperature bleed air that is less of an efficiency penalty. The coating 196 may be a barrier coating, such as a thermal barrier or environmental barrier, which is formed of a ceramic material. The coating 196 may be a monolayer coating but more typically will be a multi-layer coating. For instance, the coating 196 has a first coating layer 196a and a second coating layer 196b. In this example, the second coating layer 196b is a topcoat.

The ceramic material of the coating 196 provides thermal and/or environmental resistance. As an example, the ceramic material may include or may be yttria stabilized with zirconia, hafnia, and/or gadolinia, gadolinia zirconate, molybdate, alumina, or combinations thereof.

The bond coat for attaching the ceramic material to the wall 192 may be formed of an alloy. Example alloys may include, but are not limited to, nickel alloys, cobalt alloys, a nickel alloy coated with cobalt or cobalt alloy, or a non-nickel alloys that do not substantially react with ceramic. The bond coat may include a nickel alloy, platinum, gold, silver, or MCrAlY, where the M includes at least one of nickel, cobalt, iron, or combinations thereof.

The cell sidewalls 194a facilitate reducing internal stresses in the coating 196 that may occur from sintering at relatively high surface temperatures during use in the engine 20. The sintering may result in partial melting, densification, and diffusional shrinkage of the coating 196 and thereby induce internal stresses. The cell sidewalls 194a serve to produce faults in the coating. The faults provide locations for releasing energy associated with the internal stresses (e.g., reducing shear and radial stresses). That is, the energy associated with the internal stresses may be dissipated in the faults such that there is less energy available for causing delamination cracking between the coating 196 and the underlying wall 192.

The coating section 190 may be formed using several different fabrication techniques. As an example, the wall 192 may be fabricated by investment casting, additive manufacturing, brazing, or combinations thereof, but is not limited to such techniques. For instance, the cells 194 can be separately fabricated and brazed to the remaining portion of the wall 192, which can be investment cast or additively fabricated. Alternatively, the cells 194 can be formed by other techniques, such as depositing an alloy coating and removing sections of the alloy coating by machining, electro-discharge machining (EDM), or other removal process.

To produce the coating 196, ceramic coating material is deposited in the cells 194. The deposition process can include, but is not limited to, plasma spray or physical vapor deposition. In one example, plasma spray is used to produce a more durable version of the coating 196. For instance, the coating 196 has a laminar microstructure. The laminar microstructure includes grains of ceramic material that have a high aspect ratio. The laminar microstructure is a product of the plasma spray process, in which droplets of melted or partially melted ceramic material are sprayed onto the cells 194. Upon impact, the droplets flatten and solidify, yielding the laminar microstructure. There may be voids or pores among the grains; however, the coating 196 is substantially fully dense. For instance, the coating 196 has a porosity of less than 15%.

The ceramic coating material fills or substantially fills the cells 194 and is deposited in a thickness that may be equal to or greater than the height of the cell sidewalls 194a. At this stage, the surface of the coating may have contours from the underlying cells 194. If such contours are undesired, the surface may be machined, ground, or abraded flat. For instance, the surface is reduced down to or close to the tops of the cell sidewalls 194a.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. An airfoil (60; 160; 260; 360; 460) comprising an airfoil section (66) defining an airfoil profile (AP), the airfoil section (66) including
a core structure (72; 172; 272; 372; 472); and
a hollow panel (70; 170; 270; 370) adjacent the core structure (72...472), the hollow panel (70...370) forming at least a portion of a leading end (LE) of the airfoil profile (AP).

2. The airfoil as recited in claim 1, wherein the airfoil section (66) includes inner and outer platforms (62, 64), and the hollow panel (70...370) is affixed between the inner and outer platforms (62, 64) but is not directly secured to the core structure (72...472).

3. The airfoil as recited in claim 1 or 2, wherein the hollow panel (70...370) includes a single, exclusive internal passage (68).

4. The airfoil as recited in any preceding claim, further comprising a spacer (86; 186; 186a; 286) that offsets the hollow panel (70...370) from the core structure (72...472) such that there is a gap (G) between the hollow panel (70...370) and the core structure (72...472), wherein, optionally, the spacer (86; 186, 186a; 286) is configured to restrict gas from a core gas path from migrating from a pressure side (PS) of the airfoil profile (AP) through the gap (G) to a suction side (55) of the airfoil profile (AP).

5. The airfoil as recited in claim 4, wherein the core structure (72...472) includes cooling holes (80a) that open to the gap (G).

6. The airfoil as recited in claim 4 or 5, wherein the spacer (86; 186, 186a) is a projection on the core structure (72...472).

7. The airfoil as recited in claim 4, 5 or 6, wherein the spacer (86; 186, 186a; 286) is laterally offset from a camber line (CL) of the airfoil profile (AP).

8. The airfoil as recited in any of claims 4 to 7, wherein the spacer (186; 286) is disposed in a slot (170C; 270C) in at least one of the core structure (72...472) or the hollow panel (70...370).

9. The airfoil as recited in claim 4 or 5, wherein the spacer (286) is disposed in a first slot (372b) in the core structure (72...472) and a second slot (270c) in the hollow panel (70...370).

10. The airfoil as recited in any preceding claim, wherein the hollow panel (70...370) includes an exterior wall (74a) that forms the portion of the airfoil profile (AP) and an interior wall (74b) adjacent the core structure (72...472), the interior wall (74b) defining a panel alcove (76), and a portion of the core structure (72...472) is disposed in the panel alcove (76).

11. The airfoil as recited in any preceding claim, wherein the hollow panel (70...370) is ceramic and the core structure (72...472) is metal.

12. The airfoil as recited in any preceding claim, wherein at least one of the hollow panel (70...370) or the core structure (72...472) includes a geometrically segmented coating section (190), the geometrically segmented coating section (190) including a wall (192) that has an outer side (192b), the outer side (192b) including an array of cells (194), and a coating (196) disposed in the array of cells (194).

13. A gas turbine engine (20) comprising:
a compressor section (24);
a combustor (56) in fluid communication with the compressor section (24); and
a turbine section (28) in fluid communication with the combustor (56), at least one of the turbine section (28) or the compressor section (24) including an airfoil according to any preceding claim.

14. A method of assembling an airfoil (60...460), the method comprising securing a hollow panel (70...370) and a core structure (72...472) between inner and outer platforms (62, 64) to form an airfoil section (66), wherein the airfoil section (65) has an airfoil profile (AP) and the hollow panel (70...370) defines at least a portion of a leading end (LE) of the airfoil profile (AP).

15. The method as recited in claim 14, further comprising spacing the hollow panel (70...370) from the core structure (72...472) such that there is a gap (G) between the hollow panel (70...370) and the core structure (72...472).
